# EUROPÄISCHE PATENTSCHRIFT

(11) **EP 0 718 795 B1**
(45) Veröffentlichungstag und Bekanntmachung des Hinweises auf die Patenterteilung: **12.12.2001**
(21) Anmeldenummer: 95115496.2
(22) Anmeldetag: 30.09.1995
(51) Int. Cl.: G06K 19/16, G06K 19/04

(54) **Optisch maschinell lesbarer Informationsträger**
Optically machine readable data carrier
Porteur d'informations optiques lisibles par machine

(30) Priorität: 22.12.1994 CH 388494
(43) Veröffentlichungstag der Anmeldung: 26.06.1996
(73) Patentinhaber: OVD Kinegram AG, 6301 Zug (CH)
(72) Erfinder: Staub, René, CH-6330 Cham (CH); Tompkin, Wayne Robert, CH-5400 Ennetbaden (CH); Stepanov, Valerij, CH-6312 Steinhausen (CH)
(74) Vertreter: LOUIS, PÖHLAU, LOHRENTZ & SEGETH

(56) Entgegenhaltungen:
- EP-A- 0 215 187
- EP-A- 0 604 943
- DE-A- 3 214 075
- DE-U- 8 806 508
- FR-A- 2 336 740
- US-A- 3 552 853

## Beschreibung

Die Erfindung bezieht sich auf einen optisch maschinell lesbaren Informationsträger der im Oberbegriff des Anspruchs 1 genannten Art.

Solche optisch maschinell lesbare Informationsträger sind zur Identifikation von Gegenständen aller Art, wie beispielsweise Dokumente, Noten, Schlüssel, Ausweisen usw., verwendbar.

Ein optisch maschinell lesbarer Informationsträger der im Oberbegriff des Anspruchs 1 genannten Art ist aus der europäischen Patentanmeldung EP-568'186 A2 bekannt. Der Informationsträger trägt an einer Stelle beugungsoptisch wirksame Sicherheitsmarken. Die Sicherheitsmarken werden zur Kennzeichnung eines Artikels aus einem Satz verschiedener Sicherheitsmarken ausgewählt und die vorbestimmte Anzahl einzeln auf den Artikel geklebt. In ihrer Kombination ergeben die in der vorbestimmten Anzahl und in der richtigen Reihenfolge aufgeklebten Sicherheitsmarken einen optischen Identifikationsschlüssel, der in Reflexion oder Transmission auslesbar ist.

Aus der Schweizer Patentschrift CH-PS 594'935 ist ein Dokument als Informationsträger bekannt (siehe Präambel des Anspruchs 1), bei dem eine Anzahl paralleler optisch maschinell auslesbaren Zeilen mit einer Vielzahl von mit ihren Berandungen nicht aneinander stossenden Feldern angeordnet ist. Jedes Feld weist eine beugungsoptisch wirksame Markierung auf, die in das Substrat des Dokuments eingeprägt ist und den Wert einer binären Ziffer (Bit) darstellt, deren Stellenwert durch die relative Anordnung des Feldes in der Zeile festgelegt ist. Durch Zusammenfassen von mehreren Bits zu Gruppen kann die Information mit einem Fehlererkennungskode verschlüsselt werden, damit nachträglich veränderte Markierungen erkannt werden. Eine dazu parallele, optisch auslesbare Taktspur aus nicht aneinander stossenden Feldern mit beugungsoptisch wirksamen Markierungen erhöht die Sicherheit des Auslesens der gespeicherten Information.

Die aus der Schweizer Patentschrift CH 616'254 bekannte Taktspur mit zyklisch sich wiederholenden Merkmalen erzeugen im Leser eine Signalfolge, aus der die momentane Ableserichtung längs der Taktspur erkennbar ist.

Die Schweizer Patentschrift CH 604'146 beschreibt, wie sich unter lokaler Wärmeeinwirkung ein in eine Kunststoffoberfläche eingeprägtes, optisch beugungswirksames Reliefmuster an der erwärmten Stelle so verändert, dass sich wieder die Struktur ausbildet, die die geprägte Kunststoffoberfläche vor dem Prägen aufwies.

Die beugungsoptisch wirksamen Reliefmuster können in Kunststofflaminate gemäss der europäischen Patentanmeldung EP-401'466 A1 eingebettet werden. Eine Übersicht über die für die Herstellung verwendbaren Materialien enthält die US-Patentschrift 4'856'857.

Der Stand der Technik weist den Nachteil auf, dass die optisch maschinell lesbaren Informationsträger entweder eine Kodierung aus einzeln zusammengestellten Elementen oder leicht zu vereinzelnden Elementen aufweist oder sich als Dokument nicht zum Anbringen an sichernden Gegenständen eignet.

Der Erfindung liegt die Aufgabe zugrunde, ein platzsparendes, kostengünstiges Speichermedium für Informationen zu schaffen, die einmal maschinell einschreibbar und mehrmals optisch maschinell auslesbar sind, und das mit hoher Sicherheit Versuche der Fälschung der Information erkennen lässt.

Die genannte Aufgabe wird erfindungsgemäss durch die Merkmale der Ansprüche 1 und 11 gelöst. Weiterbildungen der Erfindung ergeben sich aus den abhängigen Ansprüchen.

Nachfolgend werden Ausführungsbeispiele der Erfindung anhand der Zeichnungen in den Figuren näher erläutert.

Es zeigt:
- Figur 1: ein Speichermedium mit einer Leseeinrichtung für optische Markierungen,
- Figur 2: einen optischen Informationsträger,
- Figur 3: den optischen Informationsträger mit einer richtungserkennenden Taktspur,
- Figur 4: eine Schreib-/Leseeinrichtung,
- Figur 5: den optischen Informationsträger mit gespeicherter Information,
- Figur 6: einen Strichkode,
- Figur 7: eine Einrichtung zum Lesen des optischen Informationsträgers,
- Figur 8: ein System mit einem Schlüssel und
- Figur 9: eine Ausweiskarte.

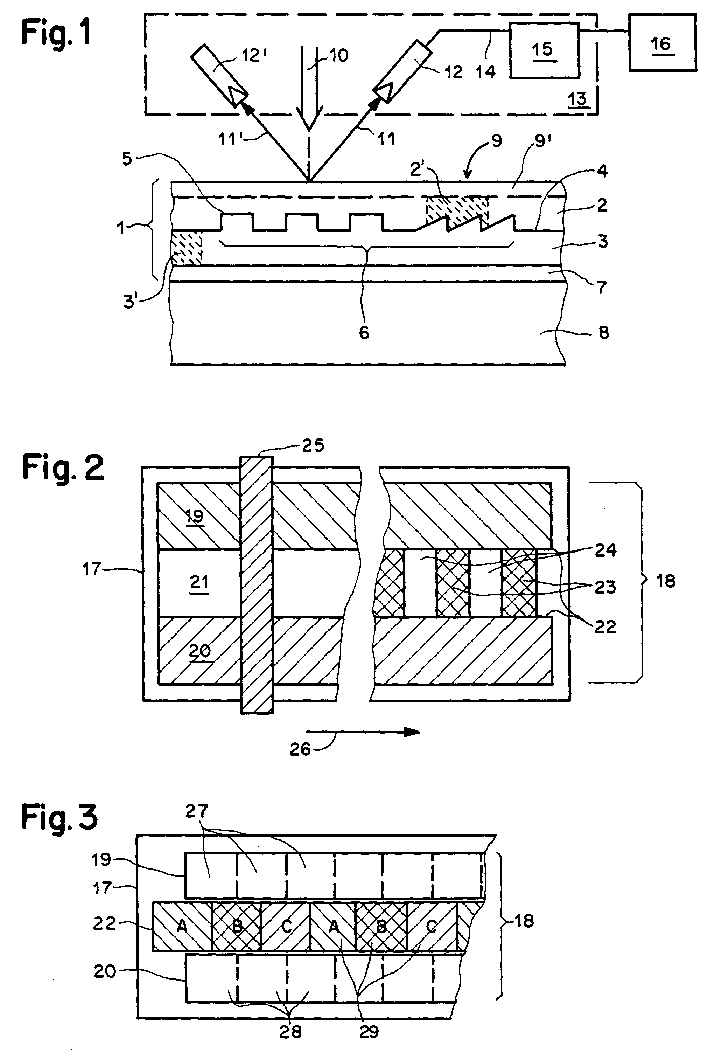

In der Figur 1 bedeutet 1 ein Kunststofflaminat eines Speichermediums bestehend aus zwei Schutzschichten 2 und 3, die an ihrer gemeinsamen Grenzfläche 4 eingeprägte, mikroskopisch feine Reliefstrukturen 5 aufweisen, deren Wirkung als Beugunggitter durch die Parameter Linienabstand, Profil und Azimut bestimmt ist. Durch Prägen der Reliefstrukturen 5 mittels einer geheizten Matrize in eine der Schutzschichten 2; 3 werden optische Markierungen 6 erzeugt. Die zu beprägende Schutzschicht 2 bzw. 3 weist vorzugsweise vor dem Prägen eine Mattstruktur auf. Das Kunststofflaminat 1 kann in unterschiedlichen Ausführungen hergestellt werden, eine davon ist in der Zeichnung als Beispiel dargestellt. Die eine Oberfläche des Kunststofflaminats 1 ist mit einem Klebematerial, das eine Klebeschicht 7 bildet, vollflächig überzogen, damit das Speichermedium fest mit einem Gegenstand 8 verbindbar ist. Das Klebematerial der Klebeschicht 7 kann auch die Aufgabe der einen Schutzschicht 2 bzw. 3 übernehmen. Nur vom Material her ist die Klebeschicht 7 von der einen Schutzschicht 2 bzw. 3 unterscheidbar, in beiden Fällen ist die Schutzfunktion vorhanden. Gehört das Klebematerial zur Gruppe der Heisskleber, weist das Kunststofflaminat 1 zum Schutz gegen die Zerstörung der optischen Markierungen 6 durch Wärmeeinwirkung beim Aufkleben auf seiner freien Oberfläche 9 vorzugsweise eine Schutzfolie 9' aus einem zähen, hochwarmfesten Kunststoff auf, wie dies die eingangs erwähnte europäische Patentanmeldung EP-401'466 A1 lehrt. Bei der Herstellung wird das Kunststofflaminat 1 als langes Band hergestellt, von dem nach Bedarf Stücke als aufklebbare optische Speichermedien abgeschnitten werden und die mittels der Klebeschicht 7 auf den zu sichernden Gegenständen 8 befestigbar sind. Die Schutzfolie 9' kann auch durch direktes Auftragen eines UV-härtenden Lacks auf die erste Schutzschicht 2 und anschliessender Trocknung mit ultravioletter Strahlung erzeugt werden.

Wird beispielsweise durch Wärmeleitung oder Licht an lokalen Stellen den Markierungen 6 Energie übertragen, ändert sich die Reliefstruktur 5 in die vor dem Prägen vorhandene Struktur der beprägten Oberfläche der Schutzschicht 2 bzw. 3 zurück, also in die Mattstruktur, eine andere Reliefstruktur 5 oder in eine strukturlose, glatte Fläche. Die übertragene Energie wird so dosiert zugeführt, dass sich die Oberfläche des Kunststofflaminats 1 nicht verändert oder sie nicht zerstört wird.

Ein auf die optische Markierung 6 einfallender Lichtstrahl 10 erfährt eine von der Wellenlänge des einfallenden Lichtes abhängige Ablenkung in die entsprechenden Beugungsordnungen, die beispielsweise bei einfarbigem Licht mittels der beiden symmetrisch zum Lichtstrahl 10 gezeichneten Pfeile der Richtungen 11; 11' angedeutet sind. Wenigstens ein in der Richtung 11 bzw. 11' angeordneter Lichtsensor 12 bzw. 12' ermöglicht das maschinelle Lesen mit einer Leseeinrichtung 13, die in einer über Leitungen 14 mit einem Steuergerät 15 Signale des Lichtsensors 12 bzw. 12' auswertet und das Ergebnis einer ausserhalb der Leseeinrichtung 13 angeordneten Einrichtung nachfolgend Einheit 16 genannt, übermittelt. Mit zwei in den Richtungen 11 und 11' angeordneten Lichtsensoren 12; 12' weist die Leseeinrichtung 13 den Vorteil auf, die Markierungen 6 mit asymmetrischen Reliefstrukturen 5 von solchen mit symmetrischen Reliefstrukturen 5 unterscheiden zu können. Bei normaler Beleuchtung sind die für sichtbares Licht maschinell auslesbare Markierungen 6 visuell leicht am Farbenspiel erkennbar.

Die Grenzfläche 4 weist beispielsweise eine durch Bedampfen erzeugte Metall-, Halbleiter- oder dielektrische Schicht als optisch wirksame Reflexionsschicht auf, wobei deren Schichtdicke und Zusammensetzung das Transmissions- und Reflexionsvermögen der Grenzfläche 4 bestimmt, d. h. ob die Markierungen 6 nur in Reflexion oder auch in Transmission auslesbar sind. Die Grenzfläche 4 wirkt selbst als Reflexionsschicht, wenn die beiden Schutzschichten 2; 3 aus Materialien mit einem unterschiedlichen Brechungsindex bestehen, wobei sich die Brechungsindices als komplexe Zahlen im Real- oder Imaginärteil oder in beidem unterscheiden können. Eine Aenderung des Brechungsindex an der Grenzfläche 4 um etwa 0,1 bis 0,25 genügt schon, um maschinell sowohl in Reflexion als auch in Transmission gut lesbare Markierungen 6 zu erhalten.

Die Grenzfläche 4 mit der Mattstruktur streut das einfallende Licht des Lichtstrahls 10 gleichmässig in alle Raumrichtungen. Unabhängig von der Beobachtungsrichtung erscheinen daher die Stellen mit der Mattstruktur für das Auge immer lichtschwach oder dunkel. In der Leseeinrichtung 13 erzeugen die Stellen mit einer Mattstruktur im Lichtsensor 12 bzw. 12' kein Ausgangssignal. Die glatte Struktur der Grenzfläche 4 würde den Lichtstrahl 10 gemäss der Reflexion- und Brechungsgesetze der Optik ablenken. Der Lichtsensor 12 bzw. 12' ist so angeordnet, dass er weder gebeugtes Licht einer ihm nicht zugeordneten Reliefstruktur 5 noch gespiegeltes Licht der glatten Struktur empfängt.

Die vom Lichtstrahl 10 bzw. vom gebeugten Licht zu durchdringenden Schichten des Kunststofflaminats 1 müssen wenigstens für die Wellenlänge des zum maschinellen Ablesen der optischen Markierungen 6 verwendeten Lichts transparent sein. In der Figur 1 beispielsweise erfolgt das Auslesen der Information in Reflexion; daher sind die Schutzfolie 9' und die erste Schutzschicht 2 wenigstens für das Licht zum Auslesen transparent und die optischen Eigenschaften der zweiten Schutzschicht 3, der Klebeschicht 7 und der Gegenstand 8 sind vom Ablesen unabhängig wählbar oder sind aus anderen Gründen vorgegeben. Das Kunststofflaminat 1 mit den optischen Markierungen 6, die zum Ablesen im infraroten Licht bestimmt sind, kann zusätzlich auch für Licht im sichtbaren Wellenlängenbereich transparent sein. Solche Markierungen 6 besitzen unter üblicher Beleuchtung und üblichen Betrachtungsrichtungen für das menschliche Auge ein unauffälliges, einer Mattstruktur ähnliches Erscheinungsbild.

Das Kunststofflaminat 1 eignet sich mit Vorteil als ein kostengünstiges, berührungslos optisch lesbares Speichermedium für Informationen. Durch ein einmaliges Beschreiben des fertig hergestellten und am Gegenstand 8 befestigten Speichermediums kann im Speichermedium eine Information gespeichert werden, wobei an vorbestimmten Stellen die optischen Eigenschaften der optischen Markierungen 6 mittels dosierter Wärmezufuhr lokal verändert werden.

Zum Beispiel ändert sich die Reliefstruktur 5 an den erwärmten Stellen in eine Mattstruktur, wie dies in der eingangs erwähnten Schweizer Patentschrift CH 604'146 beschrieben ist. Die Stellen mit der Mattstruktur können die Lichtsensoren 12; 12' somit allein aufgrund der unterschiedlich stark empfangenen Lichtintensität von den Stellen mit der Reliefstruktur 5 unterscheiden und ein entsprechendes Ausgangssignal erzeugen, das an das Steuergerät 15 abgegeben wird.

In einer anderen Ausführung des Informationsspeichers wird zum Einschreiben der Information die optische Eigenschaft der Reflexionsschicht auf der Grenzfläche 4 lokal verändert, ohne dass die Reliefstruktur 5 und die Schutzschichten 2; 3 beeinflusst werden. Da die Reflexionsschicht an der beleuchteten Stelle selbst Energie aus dem Lichtstrahl 10 aufnimmt, tritt bei einer genügend grossen Lichtintensität eine irreversible Umwandlung der Reflexionsschicht auf, bevor sich die Schutzschichten 2; 3 für eine Veränderung der Reliefstruktur stark genug erwärmen oder die Schutzfunktion gar einbüssen. Die Reflexionsschicht verliert daher beim Einschreiben der Information an der bestrahlten Stelle ihre Reflexionsfähigkeit und wird so durchsichtig, dass beim Auslesen der Information kein gebeugtes Licht in die vorbestimmte Richtung 11 zum Lichtsensor 12 abgelenkt wird.

In einer dritten Ausführung des Informationsspeichers ändert sich beim Einschreiben der Information die optische Eigenschaft der Schutzschichten 2 oder 3, nicht aber die Reflexionsschicht und die Reliefstruktur 5. Die beim Auslesen der Information vom Lichtstrahl 10 durchstrahlte Schutzschicht 2 bzw. 3 weist einen Farbstoff auf, der sich durch Erwärmen über eine dem Farbstoff eigene Grenztemperatur (z. B. durch Bestrahlen mit intensivem Licht) beim Einschreiben an einer erwärmten Stelle 2' bzw. 3' lokal irreversibel von einer transparenten Substanz in eine für das Licht zum Auslesen der Information absorbierende Substanz oder umgekehrt umwandelt. Beispielsweise ist die Schutzschicht 2 bzw. 3 vor dem Einschreiben der Information völlig transparent. Nach dem Einschreiben der Information ist die Schutzschicht 2 bzw. 3 an den lokal veränderten Stellen 2' bzw. 3' für das Licht zum Auslesen der Information undurchsichtig. Die vom Lichtstrahl 10 durchstrahlte Schutzschicht 2 bzw. 3 lässt an den in der Transparenz veränderten Stellen 2' bzw. 3' eine andere Lichtmenge zum Lichtsensor 12 durch als die in der Transparenz unveränderte Schutzschicht 2 bzw. 3. Für die Leseeinrichtung 13 wirkt die Veränderung der Transparenz gleich, wie wenn die Reliefstruktur 5 in eine Mattstruktur umgewandelt würde. Solche, ein thermochromes Verhalten aufweisende Farbstoffe sind z. B. aus den Schriften US -PS 2'663'654, US-PS 3'682'684 und EP 277'032 bekannt.

Bestimmt die Differenz der Brechungindices beider Schutzschichten 2; 3 in einer weiteren Ausführung des Informationsspeichers die optische Eigenschaft der Reliefstruktur 5 ermöglicht ein Einbau des thermochromen Farbstoffs in einer der beiden Schutzschichten 2, 3 beim Einschreiben den Brechungsindex einmal irreversibel zu ändern. Beim Auslesen der Information ist die Intensität der durch Beugungseffekte in den Lichtsensor 12 gelenkten Lichtmenge davon abhängig, ob sich an der lokalen Stelle 2', 3' durch Erwärmen der Farbstoff umgewandelt hat und die Differenz der Brechungindices lokal verändert ist.

In den Ausführungen der Informationsspeicher kann die Leseeinrichtung 13 die Information aus dem Muster der irreversibel veränderten Stellen 2' auf dem Hintergrund der verbliebenen, unveränderten Schutzschicht 2 bzw. 3 auslesen. Da die Leseeinrichtung 13 zum Lesen der Information nur das an den optischen Markierungen 6 gebeugte Licht empfängt bzw. dessen Fehlen feststellt, weisen diese Informationsspeicher den Vorteil auf, dass sie zwar einmal beschreibbar sind, jedoch nur mit grossem Aufwand nachzuahmen oder zu fälschen sind. Die optischen Markierungen 6 und die Unversehrtheit der Oberfläche 9 ermöglichen auch dem Laien eine visuelle Ueberprüfung der Echtheit des Informationsspeichers.

Mit Vorteil weist der Lichtstrahl 10 beim Einschreiben nicht nur eine höhere Intensität als das Licht zum Auslesen auf, sondern das Einschreiben erfolgt mit Licht, dessen Maximum der Intensität in einem anderen Wellenlängenbereich liegt. Beispielsweise werden die Markierungen 6 mit infrarotem Licht ausgelesen, während zum Einschreiben der Lichtstrahl 10 mit einer dem Farbstoff oder der Reflexionsschicht angepassten, kürzeren Wellenlänge als Infrarot eingesetzt wird.

Anhand der ersten Ausführung des Informationsspeichers wird die Speicherung und das Auslesen der Information und dessen Verwendung beispielhaft auch für die anderen Ausführungen beschrieben, wobei anstelle der Umwandlung der Reliefstruktur das Verhalten bezüglich Reflexion, Absorption und/oder des Brechungsindex irreversibel verändert wird.

Die Figur 2 zeigt einen vom bandförmig hergestellten Kunststofflaminat 1 (Figur 1) abgeschnittenen, noch nicht mit Informationen beschriebenen Informationsträger 17. Der Informationsträger 17 weist eine Informationsspur 18 mit den optischen Markierung 6 (Figur 1) auf. Die Informationsspur 18 besteht aus wenigstens zwei parallelen Streifen 19; 20. Jeder der Streifen 19; 20 enthält als optische Markierung 6 auf seiner ganzen Fläche ohne Unterbrechung ein einziges Beugungsgitter mit der gleichen Reliefstruktur 5 (Figur 1). Die mikroskopisch feinen Reliefstrukturen 5 der Streifen 19; 20 unterscheiden sich in wenigstens einem Gitterparameter. Die parallelen Streifen 19; 20 können mit ihren Längsseiten aneinandergrenzen oder durch einen Trennstreifen 21 beabstandet sein. Zum Einschreiben der Information sind, wie oben erwähnt, die optischen Eigenschaften der Informationsspur 18 ohne Zerstörung der Oberfläche 9 (Figur 1) des Kunststofflaminats 1 durch Einwirkung von Energie irreversibel veränderbar.

Mit Vorteil weist der Informationsträger 17 eine Taktspur 22 auf, um die Sicherheit beim Auslesen der Information längs der Informationsspur 18 zu erhöhen. Der Trennstreifen 21 kann beispielsweise die Taktspur 22 aufnehmen. Zum Beispiel kann auf der freien Oberfläche 9 (Figur 1) im Trennstreifen 21 die optisch auslesbare Taktspur 22 aus lichtabsorbierenden, balkenförmigen Taktmarkierungen 23 in konventioneller Technik aufgedruckt sein. Kostengünstiger sind die Taktmarkierungen 23, die ebenfalls als optische Markierungen 6 im gleichen Arbeitsgang wie diejenigen der Informationsspur 18 eingeprägt werden. Ihre beugungsoptisch wirksame Reliefstruktur 5 unterscheidet sich wenigstens durch einen Gitterparameter von denjenigen der optischen Markierungen 6 der Informationsspur 18. Die aufeinanderfolgenden Taktmarkierungen 23 sind untereinander durch eine Zwischenfläche 24 getrennt. Die Fläche des Trennstreifens 21 und der Zwischenflächen 24 kann für das einfallende Licht spiegelnd, matte oder auch transparent sein, je nach Ausführung der Grenzfläche 4 (Figur 1), oder kann sogar eine weitere Reliefstruktur 5 aufweisen.

Der Lichtstrahl 10 beleuchtet den Informationsträger 17 in einem vorzugsweise rechteckförmigen Lichtfleck 25, der quer zu den Streifen 19 bis 22 ausgerichtet die optischen Markierungen 6 beleuchtet und zum Ablesen der Information längs der Informationsspur 18 geführt wird. Die Breite des Lichtflecks 25 entspricht etwa der Breite der Taktmarkierung 23 in der Ableserichtung 26, während die Breite der Zwischenflächen 24 grösser ist als die des Lichtflecks 25.

In der Zeichnung der Figur 2 ist im linken Teil die Informationsspur 18 mit den Streifen 19; 20 und dem Trennstreifen 21 dargestellt. Im rechten Teil enthält die Informationsspur 18 zwei Streifen 19 und 20, die durch die Taktspur 22 getrennt sind. Die Schraffuren sind nur zeichnerische Mittel, um die optischen Markierungen 6 in den Streifen 19; 20; 21 und in den Taktmarkierungen 23 zu unterscheiden oder die Fläche des Lichtflecks 25 hervorzuheben.

Ein weiteres zeichnerisches Mittel der Darstellung sind die in der Figur 3 rechtwinklig zur Informationsspur 18 gezeichneten gestrichelten Linien, die eine Einteilung der Streifen 19 und 20 in Felder 27 und 28 bewirken. Die gestrichelten Linien dienen nur zur Beschreibung und sind auf dem Informationsträger 17 in Wirklichkeit nicht vorhanden. Die Taktspur 22 weist eine der Feldereinteilung entsprechende, aber um ein halbe Feldlänge verschobene Teilung in Taktspurfelder 29 auf. Die Taktspurfelder 29 enthalten optische Markierungen 6 mit drei verschiedenen Reliefstrukturen 5, die hier mit den Buchstaben A, B und C bezeichnet sind und die sich längs der Taktspur 22 zyklisch wiederholen, beispielsweise
ABCABCABCABCABCABCABCABC.

Die Leseeinrichtung 13 (Figur 1) benötigt allein für das Erkennen der Taktspur 22 wenigstens drei Lichtsensoren 12 (Figur 1), dafür ist in der Leseeinrichtung 13 aus der Signalfolge beim Uebergang von einem Taktfeld 29 in das folgende erkennbar, ob sich die Ableserichtung 26 (Figur 2) während des Ablesens ändert oder nicht. Die aus der eingangs erwähnten Schweizer Patentschrift CH 616'254 bekannte Taktspur 22 mit den optischen Markierungen A, B, C in den Taktfeldern 29 ist besonders bei den Leseeinrichtungen 13 von Vorteil, bei denen der Informationsträger 17 beispielsweise von Hand transportiert wird und daher das Einhalten einer kontinuierlichen Ableserichtung 26 nicht gewährleistet ist.

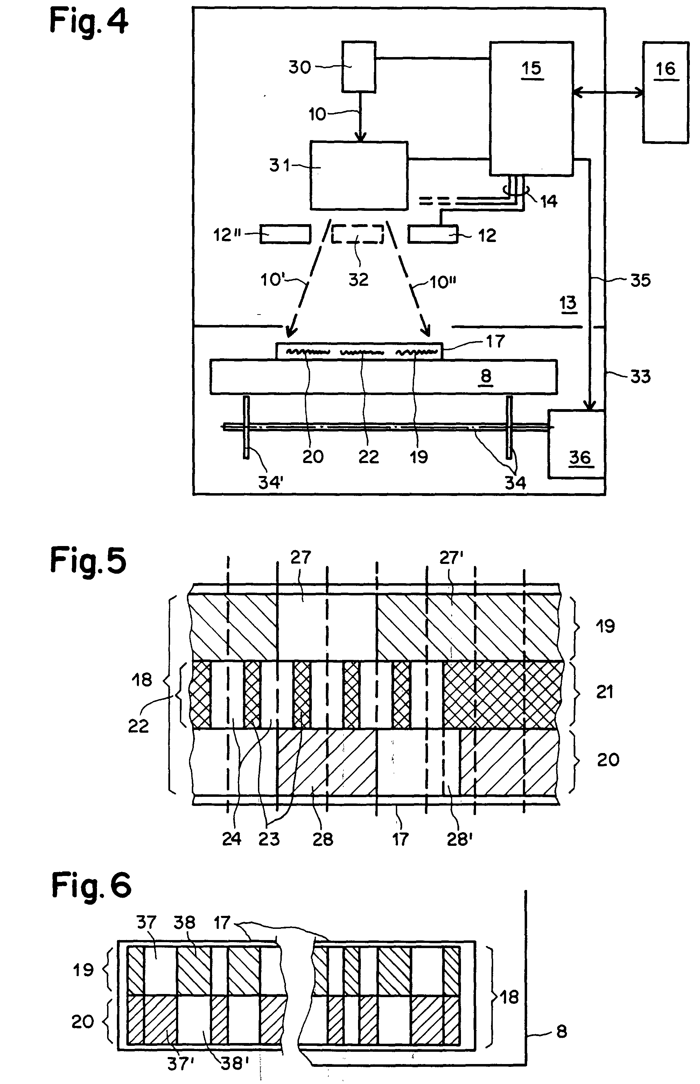

Die Leseeinrichtung 13 der Figur 4 umfasst eine Lichtquelle 30 zur Erzeugung des Lichtstrahls 10. Optische Mittel 31 fokussieren das Licht der Lichtquelle 30 auf den Informationsträger 17 beispielsweise in der Form des rechteckförmigen Lichtflecks 25 (Figur 2). Diese Ausführung der Leseeinrichtung 13 eignet sich nur zum Ablesen der in den Informationsträger 17 einbeschriebenen Information.

Eine andere Ausführung der optischen Mittel 31 der Leseeinrichtung 13 weist beispielsweise einen oszillierenden Spiegel auf, der einen kreisförmig gebündelten Lichtstrahl 10; 10', 10" quer über die Streifen 19; 20 und über die Taktspur 22 so hin- und herlenkt, dass der Bereich des Lichtflecks 25 im Mittel gleichmässig ausgeleuchtet ist. Der Lichtfleck 25 bewegt sich im Vergleich zum abgelenkten Lichtstrahl 10', 10" langsam und wandert jedoch für das Ablesen genügend schnell längs der Informationsspur 18 (Figur 3). Falls das Feld 27 (Figur 3) des Streifens 19 und/oder das Feld 28 (Figur 3) des Streifens 20 intakte optische Markierungen 6 (Figur 1) aufweisen, wird das einfallende Licht auf den dem Streifen 19 bzw. 20 geometrisch zugeordneten Lichtsensor 12 bzw. 12" gebeugt, wenn dies nicht der Fall ist, wird das Licht wegen der veränderten optischen Eigenschaften der Reliefstruktur 5 nicht zum zugeordneten Lichtsensor 12 bzw. 12" gelangen. Beispielsweise streut eine Mattstruktur das Licht so in den Raum, dass die Lichtintensität am Ort des Lichtsensors 12 bzw. 12" nicht ausreicht, ein Ausgangssignal über eine der Leitungen 14 an das Steuergerät 15 zu senden. Das Ausgangssignal wird im Steuergerät 15 registriert, wenn ein weiterer Lichtsensor 32 gebeugtes Licht von einem der Taktmarkierungen 23 (Figur 2) bzw. einem der Taktfelder 29 (Figur 3) der Taktspur 22 (Figur 2) empfängt und ein Taktsignal über die mit dem Lichtsensor 32 verbundene Leitung 14 an das Steuergerät 15 sendet.

Die geometrische Anordnung der Lichtsensoren 12; 12' (Figur 1); 12"; 32 ist durch die zugeordnete Reliefstruktur 5 (Figur 1) jeder optischen Markierung 6 bestimmt, da die Richtung des gebeugten Lichtes von der Reliefstruktur 5 abhängig ist. Beispielsweise ist der mit einem gestrichelten Kasten gezeichneter Lichtsensor 32 zum Abtasten der Taktspur 22 ausserhalb der Zeichnungsebene der Figur 4 angeordnet.

Die Leseeinrichtung 13 mit dem oszillierenden Lichtstrahl 10', 10" kann zu einer Schreib-/Leseeinrichtung 33 ergänzt werden und dient dann zum Einschreiben einer Information in den Informationsträger 17. Das Steuergerät 15 ist zum Betrieb in einem Einschreibemodus und in einem Lesemodus eingerichtet und kann mittels eines Signals von der Einheit 16 her zwischen den beiden Modi umgeschaltet werden. Als Lichtquelle 30 wird mit Vorteil eine Halbleiter - Laserdiode verwendet, deren Intensität vom Steuergerät 15 elektrisch leicht steuerbar ist. Im Einschreibe-Modus erhöht das Steuergerät 15 die Lichtintensität der Lichtquelle 30 und steuert über das optische Mittel 31 bei reduzierter Amplitude der Ablenkbewegung und bei geringerer Ablenkfrequenz den Lichtstrahl 10', 10" über die zu löschende optische Markierung 6. Die maximale Lichtintensität der Lichtquelle 30 reicht aus, um die Schutzschichten 2; 3 schon beim erstmaligen Ueberfahren mit dem Lichtstrahl 10', 10" in dessen Bereich derart zu erwärmen, dass sich die Reliefstruktur 5 in eine Mattstruktur umwandelt. Sobald der Lichtsensor 32 für die Taktspur 22 ein Ausgangssignal an das Steuergerät 15 abgibt, beginnt auf dem Feld 27 oder 28 der Löschvorgang. Die Wirksamkeit des Löschvorgangs ist mit den zugeordneten Lichtsensoren 12; 12'; 12" kontrollierbar, da deren Ausgangssignale an das Steuergerät 15 beim Löschen verschwinden müssen. Das Steuergerät 15 setzt die in das Speichermedium einzuschreibende, aus der Einheit 16 kommende Information in Steueranweisungen an das optische Mittel 31 um, so dass die Felder 27 bzw. 28 in der vorbestimmten Reihenfolge auf den Streifen 19 bzw. 20 gelöscht werden.

Mittels der Schreib-/Leseeinrichtung 33 kann auch die Taktspur 22 erzeugt werden, sofern die Schreib-/Leseeinrichtung 33 mit einer Transporteinrichtung 34, 34' für den Gegenstand 8 ausgerüstet ist. Das Steuergerät 15 ist über eine Steuerleitung 35 mit einem steuerbaren motorischen Antrieb 36 der Transporteinrichtung 34, 34' verbunden, die den Gegenstand 8 kontrolliert senkrecht zur Zeichnungsebene und auf die Leseeinrichtung 13 ausgerichtet transportiert. Der oszillierende Lichtstrahl 10'; 10" erzeugt im Einschreibemodus aus dem Trennstreifen 21 die balkenförmigen Taktmarkierungen 23 der einfachen Taktspur 22, wobei zum Beispiel in den Taktmarkierungen 23 die Reliefstruktur 5 verbleibt und in den Zwischenflächen 24 durch das Erwärmen die Mattstruktur entsteht. Die Zuordnung der Reliefstruktur 5 und der Mattstruktur in der Taktspur 22 kann ohne Nachteil auch vertauscht sein, falls die Leseeinheit 13 für das Erkennen dieser Taktspur 22 eingerichtet ist. Der Vorteil der Erzeugung der Taktspur 22 mittels der Schreib-/Leseeinrichtung 33 zeigt sich darin, dass das Prägen der optischen Markierungen 6 unabhängig von der beim Einschreiben der Information auf der Informationsspur 18 (Figur 2) benutzten Informationsdichte erfolgen kann. Die identischen, unbeschriebenen Informationsträger 17 können daher in grossen Mengen preisgünstig hergestellt werden.

Der Informationsträger 17 der Figur 5 weist auf der rechten Seite der Zeichnung in den beiden Streifen 19; 20 und dem Trennstreifen 21 die ursprünglichen optischen Markierungen 6 (Figur 1) auf. Die ursprüngliche optische Markierung 6 wird zu Beginn des Einschreibemodus vom Steuergerät 15 (Figur 4) überprüft, so dass eine Zurückweisung eines bereits beschriebenen Informationsträgers 17 erfolgt.

Auf der linken Seite der Zeichnung in der Figur 5 ist das Beschreiben des Informationsträgers 17 bereits abgeschlossen und die beugungsoptischen wirksamen Taktmarkierungen 23 mittels der matten Zwischenräumen 24 getrennt. Die kleinste Informationseinheit (= 1 Bit) bildet ein Feldpaar 27, 28, das aus dem mit der Bezugszahl 27 bezeichneten Feld des Streifens 19, dem mit der Bezugszahl 28 bezeichneten Feld des Streifens 20 und der Taktmarkierung 23 besteht. Nach dem ordnungsgemässen Einschreiben enthält die Informationsspur 18 in jedem Feldpaar 27, 28 nur ein Feld 27 bzw. 28 mit einer intakten Reliefstruktur 5 (schraffiert), da das andere beim Schreiben die Mattstruktur (nicht schraffiert) erhalten hat.

Im Lesemodus klassiert die Steuereinheit 15 jedes Feldpaar 27, 28 beim Ablesen der Informationsspur 18. Beispielsweise bedeutet die intakte Reliefstruktur 5 im Feld 27 ein auf logisch Eins gesetztes Bit, während das Bit als logisch Null gilt, wenn die intakte Reliefstruktur 5 im Feld 28 vorhanden ist. Ein allfälliges Feldpaar 27, 28 mit der Mattstruktur in beiden Feldern 27; 28 wird als Versuch einer Fälschung der Information klassiert und führt zum Abbrechen des Lesevorgangs. Das Feldpaar 27, 28 mit intakten Reliefstrukturen 5 in beiden Feldern 27; 28 kann im Steuergerät 15 als Zeichen für den Beginn oder das Ende des Lesevorgangs der eingeschriebenen Information verwendet werden.

Ein Beschreibungsvorgang ist anhand eines Feldpaars 27', 28' gezeigt. Das mit der Bezugszahl 27' bezeichnete Feld des Streifens 19 behält seine optische Markierung 6 im Gegensatz zu dem mit der Bezugszahl 28' bezeichneten Feld des Streifens 20. Hier sind bereits zwei Dritteile des Feldes 28' in die Mattstruktur umgewandelt. Bei der nächsten Bewegung des Lichtstrahls 10', 10" quer über den Informationsspur 18 wird die Reliefstruktur 5 (Figur 1) im Feld 28' vollständig in die Mattstruktur umgewandelt und die Taktmarkierung 23 mittels der entstehenden Zwischenfläche 24 vom Trennstreifen 21 abgesetzt, so dass die Taktmarkierung 23 die Reliefstruktur 5 des Trennstreifens 21 (Doppelschraffur) und die Zwischenfläche 24 die Mattstruktur (keine Schraffur) aufweist.

Die Abmessungen des Informationsträgers 17 sind sehr bescheiden. Die Streifen 19 bis 21 können quer zur Ableserichtung 26 (Figur 2) typisch eine Breite von je etwa 0,6 mm besitzen, während in der Ableserichtung 26 jedes Feldpaar 27, 28 etwa 0,2 mm misst. Die Länge des Informationsträgers 17 richtet sich nach der maximalen Anzahl der für die Information benötigten Feldpaare 27, 28. Mit den vorgeprägten Taktmarkierungen 23 kann die Breite der Taktspur 23 bis auf etwa 0,4 mm reduziert werden. Die genannten Abmessungen können verkleinert werden, jedoch benötigt die Leseeinheit 13 (Figur 4) aufwendigere Fokussiermittel für die Bündelung des Lichtstrahls 10 (Figur 4) und für das Sammeln des gebeugten Lichts. Mit Vorteil ergeben die hohe Informationsdichte und die nur einmal möglichen Veränderung der Reliefstruktur 5 eine sehr hohe Sicherheit gegen Imitation, Fälschung bzw. Verfälschung der gespeicherten Information.

Anstelle von nur zwei Streifen 19; 20 kann die Informationsspur 18 weitere dazu parallele Streifen mit optischen Markierungen 6 aufweisen, um die kleinste einer Taktmarkierung 23 zugeordnete Informationseinheit beispielsweise auf ein Byte (= 8 Bits) zu erhöhen.

In der Figur 6 weist der Informationsträger 17 nur die beiden Streifen 19 und 20 auf; die Taktspur 22 (Figur 5) fehlt. Damit die gespeicherte Information sicher ausgelesen werden kann, ist die Information mit einem der bekannten Balken- oder Strichkode einbeschrieben. Diese Strichkode sind im Handel weltweit benutzt und finden sich auch auf den Titelblätter der europäischen Patentschriften. Den Strichkode ist gemeinsam, dass beim Ablesen der Information, die durch eine charakteristische Gruppierung von verschieden breiten Strichen 37 und Strichabständen 38 dargestellt ist, aus dem Ablesesignal nicht nur die digitale Information gewonnen, sondern auch das für die Erkennung der Information notwendige Taktsignal erzeugt wird (= selbsttaktender Kode). In der Zeichnung der Figur 6 ist nur ein Ausschnitt aus dem Strichkode dargestellt und zeigt das Prinzip der Aufzeichnung auf der Informationsspur 18. Der Strichkode wird zweimal parallel auf der Informationsspur 18 angeordnet gespeichert, einmal auf dem ersten Streifen 19 mit den Strichen 37 und den Strichabständen 38 und parallel dazu auf dem zweiten Streifen 20 mit den Strichen 37' und den Strichabständen 38'. Beim Aufzeichnen bewirkt der Lichtstrahl 10, 10', 10" (Figur 4) der Schreib-/Leseeinrichtung 33 (Figur 4) in den Strichen 37 des Streifens 19 ein Umwandeln der Reliefstruktur 5 (Figur 1) in die Mattstruktur, während die Striche 37' des Streifens 20 nach dem Einschreiben weiterhin die Reliefstruktur 5 aufweisen. Bei den Strichabständen 38; 38' hingegen verbleibt die Reliefstruktur 5 im Streifen 19 und die Mattstruktur wird im Streifen 20 erzeugt. Jedes Strichpaar 37, 37' und jedes Strichabstandspaar 38, 38' besteht wie bei den Feldpaaren 27', 28' der oben erwähnten, aequidistant beschriebenen Informationsträgern 17 aus jeweils einem Abschnitt mit der dem Paar eigenen Breite mit der Mattstruktur und der Reliefstruktur 5. Die beiden Aufzeichnungen des Strichkodes im ersten Streifen 19 und im zweiten Streifen 20 sind zueinander in Bezug auf die optischen Markierungen 6 komplementär, da aus dem Muster im ersten Streifen 19 durch ein Vertauschen der Mattstruktur und der Reliefstruktur 5 das Muster im zweiten Streifen erhalten wird. Die Aufzeichnung des Strichkodes weist den Vorteil auf, die grosse Sicherheit gegen Fälschungsversuche des Informationsträgers 17 und die hohe Ablesesicherheit des Strichkodes zu kombinieren sowie gleichzeitig eine Reduktion der Anzahl Lichtsensoren in der Leseeinheit 13 (Figur 4) auf zwei zu erhalten. Der Informationsträger 17 wird mit dem hier beschriebenen, komplementären Strichkode erst nach dem Befestigen auf den Gegenstand 8 mit der auf den Gegenstand 8 bezogenen Information einbeschrieben.

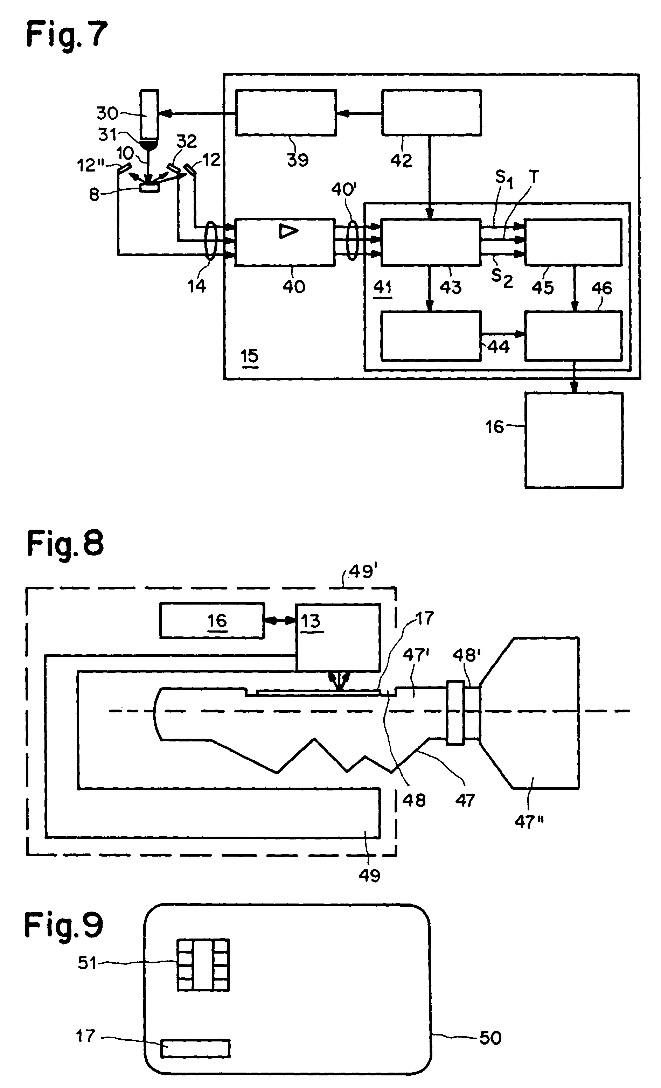

Eine einfache Ausführung der Leseeinheit 13 ist nach der Figur 7 sehr kostengünstig und einfach aufgebaut und weist drei Lichtsensoren 12; 12"; 32, die Steuereinheit 15 und die Lichtquelle 30 mit den passiven optischen Mitteln 31 auf, die aus einem Kondensator und einer Zylinderlinse (beide hier nicht im Detail gezeigt) bestehen. Die Steuereinheit 15 umfasst ein Versorgungsgerät 39 für die Lichtquelle 30, Verstärker 40 für die über die Leitungen 14 von den drei Lichtsensoren 12; 12"; 32 übermittelten Ausgangssignale sowie einen Analysator 41 für die Umwandlung der Ausgangssignale in eine für die angeschlossene, externe Einheit 16 brauchbare Signalfolge.

Mit Vorteil moduliert ein Oszillator 42 die Intensität der Lichtquelle 30, damit das Umgebungslicht den Lesevorgang nicht beeinflussen kann. Der mit einer Frequenz f arbeitende Oszillator 42 überträgt sein Frequenzsignal an das Versorgungsgerät 39 und an einen Demodulator 43. Im Takt des Frequenzsignals wird die Lichtquelle 30 ein- und ausgeschaltet. Die Frequenz f des Oszillators 42 ist mit typisch 1 kHz bis 100 kHz genügend hoch, damit der Lesevorgang nicht gestört wird. Der Analysator 41 besteht aus dem Demodulator 43, einem Start-/Stopdetektor 44, einem Dekodierer 45 und einem Register 46 zum Speichern der abgelesenen Signalfolge, bis der Ablesevorgang beendet ist, und zum Weiterleiten der Information an die externe Einheit 16. Als Folge des mit der Frequenz f modulierten Lichtstrahls 10, 10', 10" weisen die Ausgangssignale der Lichtsensoren 12; 12"; 32 ebenfalls eine Modulation mit der Frequenz f des Oszillators 42 auf. Nach der Verstärkung der Ausgangssignale im Verstärker 41 gelangen die Ausgangssignale auf getrennten Signalleitungen 40' zum Demodulator 41. Im Gleichtakt mit der Frequenz f werden die Ausgangssignale demoduliert. Der Demodulator 41 verknüpft das Signal des Lichtsensors 12 für den Streifen 19 (Figur 5) und das Taktsignal des Lichtsensors 32 mit logisch "UND" zu einem Signal S₁. Auf die gleiche Weise entsteht aus dem Signal des Lichtsensors 12" für den Streifen 20 (Figur 5) ein Signal S₂. Die Signale S₁ und S₂ sowie das Taktsignal des Lichtsensors 32 werden noch im Demodulator 41 gefiltert, bevor die Signale S₁ und S₂ sowie das Taktsignal T dem Dekodierer 45 übermittelt werden. Im Dekodierer 45 wird überprüft, ob für jedes Taktsignal T nur eines der beiden Signale S₁ und S₂ eintrifft. Die seriell eintreffenden Signale S₁ bzw. S₂ werden an das Register 46 übermittelt und dort in ihrer zeitlichen Reihenfolge des Eintreffens gespeichert. Die Information im Register 46 kann eine zusätzliche 3 aus 5 Kodierung oder 5 aus 7 Kodierung aufweisen, wie dies bereits beim Einschreiben der Information in die Informationsspur 18 (Figur 5) festgelegt ist. Wird das Ende der Aufzeichnung registriert, wird der Inhalt des Registers 46 an die Einheit 16 weitergegeben. Beim Ausbleiben beider Signale S₁ und S₂ zu einem Taktsignal T bricht, wie oben ausgeführt, die Leseeinheit 13 mittels eines vom Demodulator 41 zum Start-/Stopdetektor 44 gesandten Signals den Lesevorgang ab und löscht den Inhalt des Registers 46, bevor ein fehlerhafter Inhalt des Registers 46 zur Uebertragung an die Einheit 16 freigegeben wird. Der Start-/Stopdetektor 44 löscht das Register 46 beim Startsignal und leitet beim Eintreffen des Stopsignals die Uebertragung der im Register 46 gespeicherten Information an die Einheit 16 ein.

Beim Lesegerät 13 zum Lesen von komplementären Strichkodes fehlt der Lichtsensor 32 für die Taktspur oder ist bei einem Mehrzweckgerät ausgeschaltet. Der Demodulator 43 erhält nur die verstärkten Ausgangssignale der Lichtsensoren 12; 12" über die Signalleitungen 40' und gewinnt mit Hilfe eines für den Strichkode anwendbaren Algorithmus das Taktsignal T, das zusammen mit den beiden Signalen S₁ und S₂ zum Dekodierer 45 gesandt wird. Die übrigen Funktionen des Analysators 41 bleiben sich gleich.

Sobald der Gegenstand 8 in das Lesefenster der Leseeinheit 13 eingeschoben wird, fällt der Lichtstrahl 10 auf die optischen Markierungen 6 (Figur 1). Durch das Weiterbewegen des Gegenstands 8 wird der Lichtstrahl 10 über die Informationsspur 18 bis zum Ende der Aufzeichnung der Information geführt, so dass die ganze Information ausgelesen wird.

Die Figur 8 zeigt eine Anwendung des Informationsstreifens 17. Der Gegenstand 8 (Figur 1) ist ein Schlüssel 47, der eine Schutznut 48 bzw. 48' im Schlüsselschaft 47' aufweist, die den zu kodierenden Informationsträger 17 aufnimmt. Bei der Schutznut 48 längs der Achse des Schlüsselschafts 47' kann das Auslesen bzw. das Einschreiben der Information z. B. beim Hineinschieben des Schlüssels 47 in ein Schloss 49 erfolgen. Das Schloss 49 ist mit einer Leseeinrichtung 13 bzw. mit einer Schreib-/Leseeinrichtung 33 ausgerüstet und Teil einer Schliessanlage 49' mit der externen Einheit 16. Die externe Einheit 16 ist zum Vergleich der von der Leseeinrichtung 13 übermittelten Information mit einer in der externen Einheit 16 gespeicherten Kennung eingerichtet. Nur wenn die vom Informationsträger 17 abgelesene Information mit der Kennung übereinstimmt, gibt die externe Einheit 16 das Schloss 49 frei, da dann der Schlüssel 47 berechtigt ist, die Freigabe des Schlosses 49 mit seiner mechanischen Form auszulösen. In einer anderen Ausführung kann der Informationsträger 17 auch in der Schutznut 48' am Umfang des Schlüsselschafts 47' eingeklebt sein oder am Uebergangskonus des Schlüsselschafts 47' zum Schlüsselgriff 47" befestigt sein. Die Auslesung erfolgt in diesem Fall beim Drehen des ins Schloss 49 gesteckten Schlüssels 47. Dieses Freigabeverfahren prüft zuerst die Form des Schlüssels 47, bevor die Einheit 16 das Schloss 49 freigibt. Diese Funktion kann mit der mechanischen Freigabe des Schlosses 49 durch die in der Form des Schlüssels 47 gespeicherten Information kombiniert sein, d. h. das Schloss 49 ist nur zu öffnen, wenn die mechanische Form des Schlüssels 47 und die optisch gespeicherte Information des Informationsträgers 17 zum Schloss 49 passen.

In der Figur 9 ist der Gegenstand 8 (Figur 1) eine Ausweiskarte 50. Auf deren Fläche ist der Informationsträger 17 an einer zum Ablesen der Information geeigneten Stelle angeordnet. Wird von der Leseeinrichtung 13 (Figur 4) die Information erkannt und in der externen Einheit 16 (Figur 4) die Berechtigung für eine Dienstleistung festgestellt, erfolgt die Freigabe der Dienstleistung. Die im Informationsträger 17 gespeicherte Information kann mit der in einer als "smart card" bekannten Ausweiskarte 50 verglichen werden, wobei ein elektronischer Baustein 51 der "smart card"-Ausweiskarte 50 die Funktion der externen Einheit 16 (Figur 1) übernehmen kann.

Eine andere Ausführung der Ausweiskarte 50 weist einen in die Ausweiskarte 50 integrierten Informationsträger 17 auf, wobei, wie aus der Figur 1 ersichtlich ist, die eine Schutzschicht 3 bei der Herstellung direkt auf den flächigen Gegenstand 8 aufgetragen wird und sich die Klebeschicht 7 erübrigt. Nach dem Prägen und Formieren der Grenzschcht 4 erfolgt der Auftrag der anderen Schutzschicht 2.

Der Vorteil des Informationsträgers 17 (Figur 2) liegt neben der inhärent hohen Sicherheit der optisch kodierten Information und der auf kleinem Platz hohen Zahl möglicher Kombinationen aus den Informationseinheiten auch darin, dass die Herstellung und das Anbringen des Informationsträgers 17 auf dem Gegenstand 8 vor dem Einschreiben der individuellen Information erfolgen kann. Alle hier gezeigten Leseeinrichtungen 13 arbeiten mit reflektiertem, gebeugtem Licht. Ohne Einschränkung können die Leseeinrichtungen 13 auch bei Transmission des gebeugten Lichts durch den Informationsträger 17 hindurch arbeiten, vorausgesetzt, der Informationsträger 17 und der Gegenstand 8 sind für das Licht transparent und die Lichtsensoren 12; 12'; 12"; 32 an der vorbestimmten Stelle angeordnet.

## Patentansprüche

1. Optisch maschinell lesbarer Informationsträger (17) aus einem Kunststofflaminat (1) bestehend aus wenigstens zwei Schutzschichten (2; 3) mit dazwischen an einer gemeinsamen Grenzfläche (4) angeordneten, geprägten mikroskopisch feinen Reliefstrukturen (5) als optische Markierungen (6), deren optische Wirkung zum Einschreiben einer Information ohne Zerstörung der Oberfläche (9) des Kunststofflaminats (1) durch Einwirkung von Energie irreversibel veränderbar ist,
**dadurch gekennzeichnet,**
**dass** eine Informationsspur (18) wenigstens zwei parallele Streifen (19; 20; 21) zur Aufzeichnung der Information mittels eines Musters von veränderter und nicht veränderter optischer Markierung (6) umfasst,
**dass** jeder der parallelen Streifen (19; 20; 21) auf seiner ganzen Fläche eine optische Markierung (6) aufweist,
**dass** sich die optischen Markierungen (6) der parallelen Streifen (19; 20; 21) in den Gitterparametern der mikroskopisch feinen Reliefstruktur (5) und im Beugungsverhalten unterscheiden und
**dass** die Aufzeichnung der Information im ersten Streifen (19) und die Aufzeichnung der Information im zweiten Streifen (20) in Bezug auf das Muster der veränderten und nicht veränderten optischen Markierung (6) komplementär sind.

2. Optischer Informationsträger (17) nach Anspruch 1, **dadurch gekennzeichnet, dass** parallel zur Informationsspur (18) eine optisch lesbare Taktspur (22) mit Taktmarkierungen (23) angeordnet ist und dass jeweils zwei benachbarte Taktmarkierungen (23) durch eine sich optisch unterscheidbare Zwischenfläche (24) getrennt sind.

3. Optischer Informationsträger (17) nach Anspruch 2, **dadurch gekennzeichnet, dass** die Taktmarkierungen (23) eine beugungsoptische Reliefstruktur (5) aufweisen, die sich wenigstens in einem Gitterparameter von denjenigen der optischen Markierungen (6) unterscheiden.

4. Optischer Informationsträger (17) nach Anspruch 1, **dadurch gekennzeichnet, dass** parallel zu den Streifen (19; 20) der Informationsspur (18) aufeinanderfolgende Taktfelder (29) eine optisch lesbare Taktspur (22) bilden, dass jedes Taktfeld (29) eine von drei verschiedenen Reliefstrukturen (5) aufweist, dass sich die drei Reliefstrukturen (5) der Taktfelder (29) von den Reliefstrukturen (5) der optischen Markierungen (6) unterscheiden und dass die drei verschiedenen Reliefstrukturen (5) der Taktfelder (29) längs der Taktspur (22) zyklisch aufeinanderfolgend angeordnet sind.

5. Optischer Informationsträger (17) nach Anspruch 1, **dadurch gekennzeichnet, dass** die Aufzeichnung der Information in beiden Streifen (19; 20) das Muster eines Strichkodes aus Strichen (37; 37') und Strichabständen (38; 38') bilden, wobei die Muster der beiden Strichkodes in Bezug auf die veränderten und nicht veränderten optischen Markierungen (6) komplementär sind.

6. Optischer Informationsträger (17) nach einem der Ansprüche 1 bis 5, **dadurch gekennzeichnet, dass** das Kunststofflaminat (1) zum Aufkleben auf einen zu sichernden Gegenstand (8) mit einer Klebeschicht (7) ausgerüstet ist.

7. Optischer Informationsträger (17) nach einem der Ansprüche 1 bis 6, **dadurch gekennzeichnet, dass** zwischen den Schutzschichten (2; 3) auf der Grenzfläche (4) eine angeordnete, optisch wirksame Reflexionsschicht aus einem Metall, einem Halbleiter oder einem Dielektrikum angeordnet ist und dass die Reflexionsschicht eine durch Absorption von Licht veränderbare Reflexionsfähigkeit aufweist.

8. Optischer Informationsträger (17) nach einem der Ansprüche 1 bis 7, **dadurch gekennzeichnet, dass** das Material der einen Schutzschicht (2 bzw. 3) zum Verändern seiner Transparenz einen durch Zufuhr von Energie veränderbaren Farbstoff mit einem komplexen Brechungsindex aufweist.

9. Berechtigungssystem bestehend aus einem Lesegerät (13; 33), einer externen Einheit (16) und einem optisch lesbaren Informationsträger (17) nach einem der Ansprüche 1 bis 8, **dadurch gekennzeichnet, dass** das Lesegerät (13; 33) und die externe Einheit (16) in einer Schliessanlage (49') eingebaut sind, dass der Informationsträger (17) auf einem Schlüssel (47) angeordnet ist, dass das Lesegerät (13; 33) zum Auslesen der in der Informationsspur (18) gespeicherten Information einen Lichtstrahl (10) und Lichtsensoren (12; 12') aufweist, dass das Lesegerät (13; 33) weiter wenigstens einen Dekodierer (45) zum Vergleichen von Signalen S1 des Lichtsensors (12) für den ersten Streifen (19) mit Signalen S2 des Lichtsensors (12') für den zweiten Streifen (20) und zum Vergleichen der ausgelesenen Information mit einer in der externen Einheit gespeicherten Kennung umfasst, und dass das Lesegerät (13; 33) mit einer externen Einheit (16) zur Freigabe des Schlosses (49) der Schliessanlage (49') bei einer Uebereinstimmung der Information mit der Kennung verbunden ist.

10. Berechtigungssystem nach Anspruch 9, **dadurch gekennzeichnet, dass** die Informationsspur (18) des Informationsträgers (17) auf dem Schlüssel (47) zum Auslesen beim Hineinschieben in das Schloss (49) bzw. beim Drehen im Schloss (49) angeordnet ist.

11. Verfahren zum Beschreiben eines optischen Informationsträgers (17) durch Verändern der optischen Eigenschaften der Informationsspur (18) mit beugungsoptischen Markierungen (6) ohne Zerstörung der Oberfläche (9) zur Erzeugung eines Informationsträgers nach einem der Ansprüche 1 bis 8,
**dadurch gekennzeichnet, dass** durch Zuführen von gebündelter Lichtenergie in das Kunststofflaminat (1) im Bereich der beiden Streifen (19; 20; 21) der Informationsspur lokal die optischen Eigenschaften der Informationsspur (18) so verändert werden, dass die Information als Muster in den Streifen (19; 20; 21) einbeschrieben wird, wobei auf den Streifen (19; 20; 21) Stellen mit ursprünglichen beugungsoptischen Eigenschaften durch Stellen mit den veränderten optischen Eigenschaften getrennt werden, und wobei in den beiden Streifen (19; 20) die gleiche Information parallel so aufgezeichnet wird, dass das Muster der Information im ersten Streifen (19) und im zweiten Streifen (20) zueinander in Bezug auf die optischen Eigenschaften der optischen Markierungen (6) komplementär registriert wird.

12. Verwendung eines optischen Informationsträgers (17) nach einem der Ansprüche 1 bis 8 auf einer Ausweiskarte (50).

## Claims

1. Optically machine-readable information carrier (17) comprising a plastics laminate (1) made up of at least two protective layers (2; 3) with embossed microscopically fine relief structures (5) arranged in between on a common boundary surface (4) as optical markings (6), the optical effect of which can be irreversibly changed by the action of energy for writing in an item of information without destroying the surface (9) of the plastics laminate (1),
**characterized**
**in that** an information track (18) comprises at least two parallel strips (19; 20; 21) for recording the information by means of a pattern of changed and unchanged optical markings (6),
**in that** each of the parallel strips (19; 20; 21) has an optical marking (6) on its entire surface area,
**in that** the optical markings (6) of the parallel strips (19; 20; 21) differ in the grating parameters of the microscopically fine relief structure (5) and in the refraction behaviour and
**in that** the recording of the information in the first strip (19) and the recording of the information in the second strip (20) are complementary with respect to the pattern of the changed and unchanged optical markings (6).

2. Optical information carrier (17) according to Claim 1, **characterized in that** an optically readable clock track (22) with clock markings (23) is arranged parallel to the information track (18) and **in that** respective pairs of neighbouring clock markings (23) are separated by an optically distinguishable intermediate surface (24).

3. Optical information carrier (17) according to Claim 2, **characterized in that** the clock markings (23) have a diffracting optical relief structure (5), which differs at least in one grating parameter from those of the optical markings (6).

4. Optical information carrier (17) according to Claim 1, **characterized in that**, parallel to the strips (19; 20) of the information track (18), successive clock fields (29) form an optically readable clock track (22), **in that** each clock field (29) has one of three different relief structures (5), **in that** the three relief structures (5) of the clock fields (29) differ from the relief structures (5) of the optical markings (6) and **in that** the three different relief structures (5) of the clock fields (29) are arranged cyclically one after the other along the clock track (22).

5. Optical information carrier (17) according to Claim 1, **characterized in that** the recording of the information in both strips (19; 20) forms the pattern of a bar code comprising bars (37; 37') and bar spacings (38; 38'), the patterns of the two bar codes being complementary with respect to the changed and unchanged optical markings (6).

6. Optical information carrier (17) according to one of Claims 1 to 5, **characterized in that** the plastics laminate (1) is provided with an adhesive layer (7) for adhesively fixing onto an object (8) to be secured.

7. Optical information carrier (17) according to one of Claims 1 to 6, **characterized in that** an arranged, optically effective reflective layer of a metal, a semiconductor or a dielectric is arranged between the protective layers (2; 3) on the boundary surface (4) and **in that** the reflective layer has a reflectivity which can be changed by absorption of light.

8. Optical information carrier (17) according to one of Claims 1 to 7, **characterized in that** the material of the one protective layer (2 or 3) has a colorant with a complex refractive index, which can be changed by supplying energy, for changing its transparency.

9. Authorization system comprising a reader (13; 33), an external unit (16) and an optically readable information carrier (17) according to one of Claims 1 to 8, **characterized in that** the reader (13; 33) and the external unit (16) are installed in a locking system (49'), **in that** the information carrier (17) is arranged on a key (47), **in that** the reader (13; 33) has a light beam (10) and light sensors (12; 12') for reading out the information stored in the information track (18), **in that** the reader (13; 33) further comprises at least one decoder (45) for comparing signals S1 of the light sensor (12) for the first strip (19) with signals S2 of the light sensor (12') for the second strip (20) and for comparing the read-out information with an identification code stored in the external unit, and **in that** the reader (13; 33) is connected to an external unit (16) for releasing the lock (49) of the locking system (49') when the information coincides with the identification code.

10. Authorization system according to Claim 9, **characterized in that** the information track (18) of the information carrier (17) is arranged on the key (47) for reading out when it is pushed into the lock (49) or turned in the lock (49).

11. Method of writing onto an optical information carrier (17) by changing the optical properties of the information track (18) with refractive optical markings (6) without destroying the surface (9) to produce an information carrier according to one of Claims 1 to 8, **characterized in that**, by applying focused light energy to the plastics laminate (1) in the region of the two strips (19; 20; 21) of the information track, the optical properties of the information track (18) are changed locally in such a way that the information is written into the strips (19; 20; 21) as a pattern, locations with the original refractive optical properties on the strips (19; 20; 21) being separated by locations with the changed optical properties, and the same information being recorded in parallel in the two strips (19; 20) in such a way that the pattern of the information in the first strip (19) and in the second strip (20) is registered such that it is complementary to each other with respect to the optical properties of the optical markings (6).

12. Use of an optical information carrier (17) according to one of Claims 1 to 8 on an identity card (50).

## Revendications

1. Support d'information (17) pouvant être lu au moyen d'un appareil optique et formé d'un produit stratifié en matière plastique (1) constitué d'au moins deux couches de protection (2 ; 3) comportant, disposées entre celles-ci sur une surface limite (4) commune, des structures en relief (5) d'une finesse microscopique, obtenues par gaufrage et servant de marquages optiques (6) dont l'effet optique, en vue de l'inscription d'une information sans endommagement de la surface (9) du produit stratifié en matière plastique (1), peut être modifié d'une manière irréversible par action d'une énergie,
**caractérisé**
**en ce qu'**une piste d'information (18) comprend au moins deux bandes parallèles (19 ; 20 ; 21) en vue de l'enregistrement de l'information au moyen d'un motif de marquage optique (6) modifié et non modifié, et
**en ce que** chacune des bandes parallèles (19 ; 20 ; 21) comporte un marquage optique (6) sur toute sa surface,
**en ce que** les marquages optiques (6) des bandes parallèles (19 ; 20 ; 21) se distinguent par les paramètres de réseau de la structure en relief (5) à finesse microscopique et par le comportement de diffraction et
**en ce que** l'enregistrement de l'information dans la première bande (19) et l'enregistrement de l'information dans la seconde bande (20) sont complémentaires en ce qui concerne le motif du marquage optique (6) modifié et non modifié.

2. Support d'information optique (17) suivant la revendication 1, **caractérisé en ce qu'**une piste de synchronisation (22) pouvant être lue optiquement et comportant des marquages de synchronisation (23) est disposée parallèlement à la piste d'information (18) et **en ce que** les marquages de toute paire de marquages de synchronisation (23) voisins sont séparés par une surface intermédiaire (24) respective pouvant être distinguée optiquement.

3. Support d'information optique (17) suivant la revendication 2, **caractérisé en ce que** les marquages de synchronisation (23) comprennent une structure en relief (5) à optique de diffraction qui se distingue au moins par un paramètre de réseau vis-à-vis de celles des marquages optiques (6).

4. Support d'information optique (17) suivant la revendication 1, **caractérisé en ce que**, parallèlement aux bandes (19 ; 20) de la piste d'information (18), des champs de synchronisation (29) qui se succèdent constituent une piste de synchronisation (22) pouvant être lue optiquement, **en ce que** chaque champ de synchronisation (29) comporte l'une parmi trois structures en relief (5) différentes, **en ce que** les trois structures en relief (5) des champs de synchronisation (29) se distinguent des structures en relief (5) des marquages optiques (6) et **en ce que** les trois structures en relief (5) différentes des champs de synchronisation (29) sont disposées de façon à se succéder d'une manière cyclique le long de la piste de synchronisation (22).

5. Support d'information optique (17) suivant la revendication 1, **caractérisé en ce que** l'enregistrement de l'information dans les deux bandes (19 ; 20) constitue le motif d'un code barres constitué de barres (37 ; 37') et d'intervalles entre barres (38 ; 38'), les motifs des deux codes barres étant complémentaires en ce qui concerne les marquages optiques (6) modifié et non modifié.

6. Support d'information optique (17) suivant l'une des revendications 1 à 5, **caractérisé en ce que** le produit stratifié en matière plastique (1) est pourvu d'une couche de substance adhésive (7) en vue du collage sur un objet (8) à sécuriser.

7. Support d'information optique (17) suivant l'une des revendications 1 à 6, **caractérisé en ce qu'**une couche de réflexion, à action optique, en métal, semi-conducteur ou diélectrique , est disposée entre les couches de protection (2 ; 3) sur la surface limite (4) et **en ce que** la couche de réflexion possède une capacité de réflexion pouvant être modifiée par absorption de lumière.

8. Support d'information optique (17) suivant l'une des revendications 1 à 7, **caractérisé en ce que** la matière de l'une des couches de protection (2 ou 3) comprend, en vue de modifier sa transparence, une matière colorante possédant un indice de réfraction complexe et pouvant être modifiée par apport d'énergie.

9. Système d'autorisation constitué d'un appareil de lecture (13 ; 33), d'une unité extérieure (16) et d'un support d'information (17) pouvant être lu optiquement (17) suivant l'une des revendications 1 à 8, **caractérisé en ce que** l'appareil de lecture (13 ; 33) et l'unité extérieure (16) sont montés dans un dispositif de fermeture (49'), **en ce que** le support d'information (17) est disposé sur une clé (47), **en ce que** l'appareil de lecture (13 ; 33) comprend, en vue de la lecture de l'information en mémoire dans la piste d'information (18), un faisceau de lumière (10) et des capteurs de lumière (12 ; 12'), **en ce que** l'appareil de lecture (13 ; 33) comprend en outre au moins un décodeur (45) servant à comparer des signaux S1 du capteur de lumière (12) prévu pour la première bande (19) à des signaux (S2) du capteur de lumière (12') prévu pour la seconde bande (20) et à comparer l'information lue à une identification se trouvant en mémoire dans l'unité extérieure, et **en ce que** l'appareil de lecture (13 ; 33) est relié à une unité extérieure (16) servant à libérer la serrure (49) du dispositif de fermeture (49') lors d'une coïncidence de l'information avec l'identification.

10. Système d'autorisations suivant la revendication 9, **caractérisé en ce que** la piste d'information (18) du support d'information (17) est disposée sur la clé (47) en vue de la lecture lorsqu'on l'enfonce dans la serrure (49) ou qu'on l'a fait tourner dans la serrure (49).

11. Procédé permettant l'inscription sur un support d'information optique (17) par modification des propriétés optiques de la piste d'information (18) avec des marquages (6) à optique de diffraction, sans endommagement de la surface (9), en vue de la production d'un support d'information suivant l'une des revendications 1 à 8, **caractérisé en ce que**, par apport d'énergie lumineuse en faisceau dans le produit stratifié en matière plastique (1) dans la zone des deux bandes (19 ; 20 ; 21) de la piste d'information, les propriétés optiques de la piste d'information (18) sont modifiées localement d'une manière telle que l'information est inscrite sous forme d'un motif dans les bandes (19 ; 20 ; 21), tandis que, sur les bandes (19 ; 20 ; 21), des emplacements ayant des propriétés optiques de diffraction initiales sont séparés par des emplacements ayant les propriétés optiques modifiées, et que, dans les deux bandes (19 ; 20), la même information est enregistrée parallèlement d'une manière telle que le motif de l'information dans la première bande (19) et celui dans la seconde bande (20) sont enregistrés d'une manière complémentaire l'un vis-à-vis de l'autre en ce qui concerne les propriétés optiques des marquages optiques (6).

12. Application d'un support d'information optique (17) suivant l'une des revendications 1 à 8 à une carte d'identité (50).
